# EUROPEAN PATENT APPLICATION

(11) **EP 4 333 250 A1**
(43) Date of publication of application: **06.03.2024**
(21) Application number: 23190289.1
(22) Date of filing: 08.08.2023
(51) Int. Cl.: H02J 7/00

(54) **BATTERY MANAGEMENT CIRCUIT, BATTERY ASSEMBLY, AND POWER TOOL SYSTEM**

(30) Priority: 11.08.2022 CN 202210964293
(71) Applicant: Techtronic Cordless GP, Anderson, SC 29621 (US)
(72) Inventor: WANG, Ren Jie, Dongguan City (CN); GUO, Xi, Dongguan City (CN); MA, Hai Bo, Kwai Chung (HK)
(74) Representative: Novagraaf Group

(57) **Abstract**

The present invention provides a battery management circuit comprising a main control module, a logic control module, and a power control module; the logic control module is configured to output a power control signal in response to receiving a logic-enable signal, and to skip outputting a power control signal in response to receiving no logic-enable signal; the power control module is configured to turn on the power supply from a battery to the main control module in response to receiving a power control signal from the logic control module, and to turn off the power supply from the battery to the main control module in response to receiving no power control signal from the logic control module; the main control module is configured to send a logic-enable signal to the logic control module when powered from a battery, and to skip sending the logic-enable signal to the logic control module when in a first predetermined state. The present invention improves the power supply duration of a battery or battery pack to improve user experience of a power tool.

## Description

### Technical Field

The present invention generally relates to battery management technology, and more specifically to a low power-consumption battery management circuit, as well as a battery assembly and a power tool system that correspond thereto.

### Background Art

Power tools, as electrical devices capable of providing convenience for people, are widely used in daily life and work, driven by power lines or directly by batteries (including rechargeable batteries). As an energy storage device, a battery plays a crucial role in a power tool, and the amount of its remaining electricity directly affects whether such a power tool can continue to operate properly. It is fervently hoped that the remaining power or voltage of a battery may be kept above the numerical level at which a power tool can operate properly and for a sufficient period of time, in other words, that the power supply duration and electric energy storage duration are sufficiently long, because power supply duration greatly influences the user experience of a battery or power tool.

In order to extend the power supply duration and the electric energy storage duration, various technologies have been developed that enable a battery management system to enter a low-power mode when the power tool has remained out of use for a long time or is in a rest state, thus reducing the energy consumption of the battery. However, these technologies still have the common problem of when the battery management system is in the low-power mode, even though the battery is not connected to the power tool, the main control chip and other functional modules of the battery management system still being connected to the battery and consuming the battery power. Therefore, even when the battery management system is in the low-power mode, the battery power is still consumed by the battery management system, so that when the power tool is in use again, the available battery power has decreased, or, having remained in the low-power mode for a long time, the power tool may be unable to become usable again because the remaining battery power is too low, or, the battery may become unrechargeable due to longterm low-voltage storage with low remaining power.

### Summary of the Invention

Overall, an exemplary embodiment of the present disclosure provides a novel low-power battery management circuit, as well as a battery assembly and a power tool system that correspond thereto.

According to a first aspect, the present disclosure provides a battery management circuit for managing a battery that provides energy to an external device, the battery management circuit comprising: a main control module, a logic control module, and a power control module; the logic control module is configured to output a power control signal in response to receiving a logic-enable signal, and to skip outputting a power control signal in response to receiving no logic-enable signal; the power control module is configured to turn on the power supply from a battery to the main control module in response to receiving a power control signal from the logic control module, and to turn off the power supply from a battery to the main control module in response to receiving no power control signal from the logic control module; and the main control module is configured to send a logic-enable signal to the logic control module when powered from a battery, and to skip sending the logic-enable signal to the logic control module when in a first predetermined state.

In some embodiments, the battery management circuit further comprises a wake-up module configured to send the logic-enable signal to the logic control module in response to receiving a wake-up signal.

In some embodiments, the logic-enable signal is a level not lower than a first threshold.

In some embodiments, the first predetermined state is that the battery supplies no power to the main control module; or that the main control module receives no operating signal from the external device within a predetermined time period.

In some embodiments, the wake-up signal is a triggering signal generated by the battery in response to a user's triggering action or an operating signal of the external device.

In some embodiments, the triggering action is a user action triggering an energy status indicator switch of the battery.

In some embodiments, an operating signal of the external device is a triggering signal generated by the external device in response to a user's triggering action; or a signal related to the operating voltage signal or operating current signal of the external device.

In some embodiments, the wake-up module comprises an isolation unit configured to generate an induction signal in response to the wake-up signal, wherein the induction signal is electrically isolated from the operating signal of the external device.

In some embodiments, the wake-up module further comprises a voltage-doubling unit configured to perform voltage amplification for the induction signal to generate the logic-enable signal.

In some embodiments, the isolation unit is composed of a resistor-capacitor unit, an optocoupler, or a transformer.

In some embodiments, the battery management circuit further comprises: a battery monitoring module configured to monitor and/or display status parameters of the battery; and a communication module configured to communicate with an external device; the power control module is further configured to turn on the power supply from the battery to the battery monitoring module and the communication module in response to receiving the power control signal from the logic control module, and to turn off the power supply from the battery to the battery monitoring module and the communication module in response to receiving no power control signal from the logic control module.

In some embodiments, the power control module is connected in parallel to a power output circuit from the battery to the external device.

In some embodiments, the level of the first threshold is between 3 volts and 3.3 volts.

According to a second aspect, a battery assembly is provided, comprising a battery and a battery management circuit as described above.

According to a third aspect, a power tool system is provided, comprising a power tool and a battery assembly as described above, wherein the battery assembly is configured to supply power to the power tool.

With a battery management circuit according to the present disclosure, logical judgement may be made according to the operating status of an external device, for example, a power tool or a charging device, and, on the basis of the control signal generated after the logical judgement, the battery management circuit is controlled to enter the off state when the external device is not in use, which prevents the problem that the battery management circuit fails to be fully turned off because an attenuated output signal generated by the main control module in the battery management circuit during the off period of the battery management circuit is mistakenly connected to the battery management circuit. Moreover, when a battery management circuit according to the present disclosure enters the off state, the power supply to the main control module and other main functional modules in the battery management circuit is turned off, which reduces the consumption of battery power by the battery management circuit during the period when the external device is out of use or during the electric energy storage period of the battery, thereby prolonging the duration of power supply from the battery to the external device, and improving the user experience of the external device.

It is readily comprehensible that this section is not intended to identify key or important features of embodiments of the present disclosure, nor is it intended to limit the scope of the present disclosure. Other features of the present disclosure will be made easily understandable by the following description.

### Brief Description of the Drawings

By giving a more detailed description of some embodiments of the present disclosure in conjunction with the drawings, the above and other advantages, features, and objectives of the present disclosure will become more apparent, and in the figures:
Fig. 1 is a schematic block diagram of a battery management circuit according to an embodiment of the present disclosure;
Fig. 2 is a schematic block diagram of a wake-up module according to an embodiment of the present disclosure;
Fig. 3 is a schematic diagram of the signal waveform of a battery management circuit according to an embodiment of the present disclosure;
Fig. 4 is a schematic block diagram of a battery management circuit according to another embodiment of the present disclosure;

In all the drawings, identical or similar reference signs denote identical or similar elements.

### Specific Embodiments

The principles of the present disclosure will be described below by referring to some exemplary embodiments. It is readily comprehensible that these embodiments are described for the sole purpose of explaining, and helping those of ordinary skill in the art to understand and implement the present disclosure rather than suggesting any limitations on the scope of the present disclosure. The content of the present disclosure described herein may be implemented in various manners other than the ones described below.

As mentioned herein, the term "comprising" and variants thereof may be understood as open-ended terms, which mean "including but not limited to". The term "based on" may be understood as "at least partially based on". The term "one embodiment" may be understood as "at least one embodiment". The term "another embodiment" may be understood as "at least one other embodiment". The term "logic" refers to modules such as circuit devices for implementing certain functions, and includes other explicit and implicit definitions in the following text.

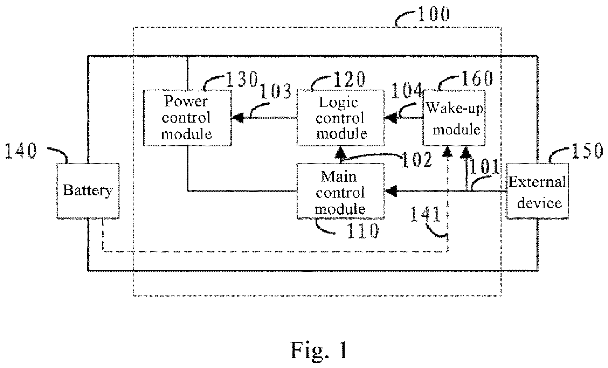

Fig. 1 is a schematic block diagram of a battery management circuit 100 according to an embodiment of the present disclosure. The battery management circuit 100 is configured to manage a battery 140 that provides energy to an external device 150. The external device 150, for example, may be a power tool, for example, a vacuum cleaner, an electric cutter, an electric grinder, a lawn mower, or a charging device, and the present disclosure is not intended to limit the type of external device, as the external device 150 may be any battery-powered device. The battery 140, for example, may be any type of battery, for example, a lithium-ion battery or a nickel-metal hydride battery, and may be a single battery, or may be composed of a plurality of single batteries connected in series or in parallel.

As shown in Fig. 1, the battery management circuit 100 comprises a main control module 110, a logic control module 120, and a power control module 130. The main control module 110, for example, is a microcontroller unit (MCU), a single-chip microcomputer, a digital signal processor (DSP), ARM, or another central processing unit (CPU), for performing arithmetic processing on an input signal and outputting a corresponding control signal to monitor the status of the battery 140 and to control actions of charging and discharging the battery 140. The main control module 110 is connected to the battery 140 through the power control module 130 to receive electrical energy from the battery 140 through the power control module 130. The main control module 110 has an input terminal, wherein, when the battery management circuit 100 is connected to the external device 150, the input terminal of the main control module 110 can receive an operating signal 101 of the external device 150 from the external device 150 to, on the basis of the received operating signal 101, determine the current operating status of the external device 150 or an operation instruction issued by the user to the external device 150, generate a corresponding control signal on the basis of the operating signal 101, and provide the control signal to another module in the battery management circuit 100, thereby controlling the charging and discharging of the battery 140 in a targeted manner.

One output terminal of the main control module 110 is connected to an input terminal of the logic control module 120. The main control module 110 is configured to, when it receives the operating signal 101 from the external device 150 through the input terminal, perform arithmetic processing of the operating signal 101, and send a logic-enable signal 102 to the logic control module 120; if it receives no operating signal 101 from the external device 150 through the input terminal within a predetermined time period, it skips sending a logic-enable signal 102 to the logic control module 120. The logic-enable signal 102 is a level signal that is not lower than a first threshold. According to the specific structure and arrangement of the logic control module 120, the level signal of the first threshold of the logic-enable signal 102, for example, may be between 3 volts and 3.3 volts, or another level value. Therefore, when the main control module 110 receives no operating signal 101 from the external device 150 through the input terminal within a predetermined time period, as long as the main control module 110 sends no level signal equal to or higher than a first threshold to the logic control module 120, regardless of whether it sends a level signal lower than the first threshold to the logic control module 120 or skips sending any level signal to the logic control module 120, this is equivalent to skipping sending a logic-enable signal to the logic control module 120.

The predetermined time period can serve as the criterion for the main control module 110 to judge whether the external device 150 is currently in a rest state and whether it is necessary to also switch the battery management circuit 100 to the off state, and its length may be optionally set as required. As various types of external devices 150 operate in different scenarios, the predetermined time period may be adjusted according to the types and application scenarios of different types of external devices 150, wherein, for example, it may be set to 5 seconds in this embodiment.

The above control logic of the main control module 110 may be achieved by hardware circuits, software algorithms, or a combination of hardware circuits and software algorithms known in the art, which will not be detailed again herein.

The logic control module 120 is configured to perform logic operations of the received signal and output a corresponding control signal to the power control module 130, wherein its logic operation function may be achieved by hardware circuits such as comparators and resistance-capacitance circuits, or by software code. The logic control module 120 has input terminals, one of which is connected to the main control module 110 to receive a logic-enable signal 102 sent by the main control module 110. The logic control module 120 also has output terminals, one of which is connected to the power control module 130 to provide a generated output signal to the power control module 130 and enable the power control module 130.

The arithmetic logic of the logic control module 120 is set as follows: when the logic control module 120 receives a level signal 102 (that is, a logic-enable signal) equal to or higher than a first threshold, it outputs a level signal 103 (that is, a power control signal) of a predetermined value after a logical operation to enable the power control module 130; when the logic control module 120 receives no level signal 102 that is equal to or higher than the first threshold, regardless of whether it receives a level signal below the first threshold or receives no level signal, it will not output any level signal 103 of a predetermined value to the power control module 130 after the logical operation. Thus, the logic control module 120 achieves logical processing of received input signals, thereby screening and filtering the received input signals.

The power control module 130 is connected to a power transmission line from the battery 140 to the main control module 110, and its control terminal is connected to an output terminal of the logic control module 120. When the control terminal of power control module 130 receives a power control signal 103 from the logic control module 120, the power supply from the battery 140 to the main control module 110 is turned on, and if no power control signal 103 is received from the logic control module 120, the power supply from the battery 140 to main control module 110 is turned off. The power control module 130 may be implemented through a switching device such as a MOSFET, a triode, an IGBT, and a relay, or by software, which is not limited in the present disclosure.

In one embodiment, a corresponding voltage regulator, for example, an LDO (low dropout regulator), may be configured for the main control module 110. The power control module 130 can turn off the power supply from the battery 140 to the main control module 110 by turning off the voltage regulator. In another implementation, the power control module 130 can change the state of the enable pin of the main control module 110, for example, changing the state of the pin from enabled to disabled, thereby turning off the power supply from the battery 140 to the main control module 110.

As shown in Fig. 1, the power control module 130 is connected in parallel to the power output circuit from the battery 140 to the external device 150. In other words, the power control module 130 does not control the electrical energy output from the battery 140 to the external device 350. This connection mode ensures that even when the main control module 110 is in the off state, the external device 150 can still receive electrical energy in response to a user's triggering action and send an operating signal, so that the operating signal is used to give a notification that the battery management circuit 100 has returned to a normal operating state.

In one embodiment, the battery management circuit 100 further comprises a wake-up module 160, which can receive a wake-up signal 101 sent by the external device 150 and output a logic-enable signal 104 to the logic control module 120. The wake-up signal 101 may be an operating signal 101 of the external device 150, and the operating signal may be a triggering signal generated by the external device 150 in response to a user's triggering action, or a voltage signal or current signal related to the operating state of the external device 150.

In one embodiment, the battery 140 may be provided with a battery energy status indicator switch, so that a user can display battery status information about the battery such as remaining battery power and battery temperature by triggering the battery energy status indicator switch. In this case, the wake-up signal 101 can also be a triggering signal 141 generated in response to a user's action of triggering the battery energy status indicator switch of the battery 140, as indicated by the dashed line with an arrowhead in Fig. 1. When the user needs to obtain energy status information about the battery 140 such as remaining power and battery temperature, the user may trigger the battery energy status indicator switch on the battery, and the user's triggering action accordingly causes the battery 140 to generate the triggering signal 141.

In one embodiment, the level value of the operating signal of the external device 150 or that of the triggering signal 141 of the battery 140 can reach or exceed the first threshold corresponding to the logic-enable signal 102. Therefore, the wake-up module 160 can directly send the operating signal or triggering signal as a logic-enable signal 104 to an input terminal of the logic control module 120. In another embodiment, the level value of the operating signal of the external device 150 may be lower than the first threshold corresponding to the logic-enable signal 102. In this case, the wake-up module 160 can, on the basis of the operating signal or triggering signal, generate a voltage-doubling signal that reaches or exceeds the first threshold, and send it as a logic-enable signal 104 to an input terminal of the logic control module 120.

The logic-enable signal 104 is similar to the logic-enable signal 102 sent by the main control module 110, and is also a level signal that reaches or exceeds the first threshold. The logic control module 120, upon receiving a logic-enable signal 104 sent by the wake-up module 160, also generates a power control signal 103 and sends it to the power control module 130. After receiving the power control signal 103, the power control module 130 will close the power transmission line from the battery 140 to the main control module 110, allowing the battery 140 to resume power supply to the main control module 110. Thus, the main control module 110 is powered on again and the battery management circuit 100 is awakened.

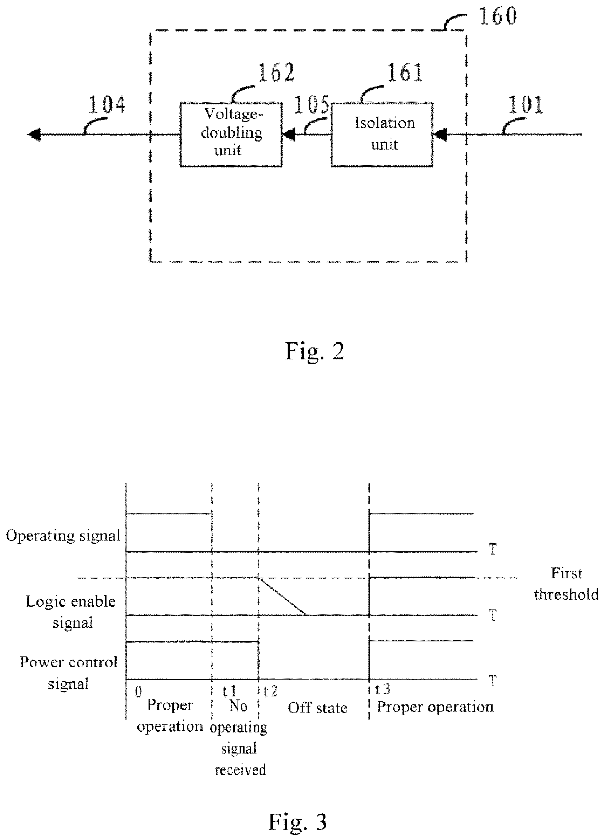

Referring to Fig. 2, in one embodiment, the wake-up module 160 comprises an isolation unit 161 and a voltage-doubling unit 162. The isolation unit 161 is configured to generate an induction signal 105 in response to the operating signal 101 of the external device 150 or the triggering signal 141 of the battery energy status indicator switch of the battery 140, and transmit the induction signal 105 to the voltage-doubling unit 162. A function of the isolation unit 161 is to electrically isolate the induction signal 105 from the operating signal 101 of the external device 150, thereby enhancing the anti-interference capability of the wake-up module 160. The isolation unit 161 may be composed of a resistor-capacitor unit, or may be composed of an optocoupler, a transformer, etc., and the present disclosure is not limited thereto. The voltage-doubling unit 162 performs voltage amplification of the induction signal 105 received from the isolation unit 161, thereby generating a logic-enable signal 104 that reaches or exceeds the first threshold. The voltage-doubling unit 162 may be achieved by a rectifier circuit or diode circuit, or by boosting with a transformer.

The operating mode of the battery management circuit 100 will be described below in conjunction with Fig. 3. As shown in Fig. 3, when the external device 150 is operating properly, that is, before the time point t1, the external device 150 properly sends an operating signal 101 to the main control module 110. At this point, the main control module 110 receives the operating signal 101, performs arithmetic processing, and, after the arithmetic processing, outputs a logic-enable signal 102 to the logic control module 120, in which case the logic-enable signal 102 is equal to or exceeds the first threshold. The logic control module 120 receives the logic-enable signal 102 and makes a logical judgement, determining that the logic-enable signal 102 meets the threshold condition that it sets, and then outputs a power control signal 103 to the power control module 130. After receiving the power control signal 103 from the logic control module 120, the power control module 130 performs a circuit closing action to turn on the power supply from the battery 140 to the main control module 110, so that the main control module 110 can keep operating properly under normal power supply conditions. Since the external device 150 keeps sending operating signals to the main control module 110 when operating properly, the main control module 110 will also keep sending logic-enable signals 102 to the logic control module 120. Then, the logic control module 120 will keep sending power control signals 103 to the power control module 130, so that the power control module 130 remains in the closed-circuit state to maintain the power supply from the battery 140 to the main control module 110. As a result, the battery management circuit 100 keeps operating properly.

When the external device 150 shuts down or fails at the time point t1 shown in Fig. 3, for example, starting from this moment, the external device 150 stops sending any more operating signals 101 to the main control module 110. If the main control module 110 receives no operating signal 101 within the set time period t1- t2, the main control module 110 determines that the external device 150 has stopped operating. Therefore, after arithmetic processing, the main control module 110 stops sending any logic-enable signals 102 equal to or higher than 3 volts to the logic control module 120 at the time point t2 or within several clock cycles after t2. When the logic control module 120 receives no logic-enable signal 102 that is equal to or exceeds the first threshold, no power control signal 103 is outputted to the power control module 130 after after the logical operation. From this point, the power control module 130 will receive no more power control signals 103 from the logic control module 120, so it will perform a disconnection action to turn off the power supply from the battery 140 to the main control module 110.

After the time point t2, the main control module 110 loses the power supply from the battery 140, in which case, even if the main control module 110 enters a reset state due to its internal residual power and continues to send a level signal to the logic control module 120 in an uncontrolled manner after reset, since the sent level signal significantly attenuates to lower than 3 volts due to the loss of power supply from the battery 140, the attenuated level signal cannot be used as a normal logic-enable signal 102 to drive the logic control module 120 to send a power control signal 103 to the power control module 130 again, so the power control module 130 will remain in a state of turning off the power supply from the battery 140 to the main control module 110. The residual power inside the main control module 110 will gradually be depleted and no longer send any level signals to the logic control module 120. At this point, the main control module 110 enters a completely off state, and since the power control module 130 is controlled by the logic control module 120 to turn off, the logic control module 120 controls the power control module 130 only in response to a logic-enable signal 102 that reaches a certain level threshold, so, compared with directly controlling the power control module 130 by an output signal of the main control module 110, the solution adopted by the present disclosure avoids the problem that an attenuated level signal outputted by the main control module 110 in a state of having lost power supply mistakenly triggers the power control module 130 to connect the circuit again, thereby avoiding the problem that the battery 140 re-supplies power to the main control module 110 due to the reconnection of power control module 130, which creates a state of repeated restarts, making a complete power-off impossible. As shown in the waveform of the time period t2-t3 in Fig. 3, during this time period, the battery management circuit 100 is in an off state. Therefore, the main control module 110 will consume no more battery energy, so the battery energy consumption by the battery management circuit 100 (especially the main control module 110 therein) is reduced when the external device 150 is not operating, which saves battery power.

In practical application, the data operation and processing of the main control module 110 and the logic control module 120 usually take one or more clock cycles, so an output signal of the main control module 110 and the logic control module 120 may be delayed by one or more clock cycles compared with an input signal. In the present disclosure, the time required for data calculation and processing is not taken into account, so that the solution is disclosed more clearly.

If the external device 150 is triggered by a user's triggering action at the time point t3, the external device 150 will send an operating signal 101 as a wake-up signal to the wake-up module 160. After receiving a wake-up signal 101, the wake-up module 160 generates a logic-enable signal 104 in response to the wake-up signal 101, and sends a logic-enable signal 104 that reaches or exceeds the first threshold to the logic control module 120. The logic control module 120 receives the logic-enable signal 104 and outputs a power control signal 103 to the power control module 130. The power control module 130, in response to the power control signal 103 received from the logic control module 120, turns on the power supply from the battery 140 to the main control module 110. Therefore, when the external device 150 is triggered by the user, on the basis of the power control signal 103 output by the logic control module 120, the main control module 110 is powered on again and keeps sending logic-enable signals 102 to the logic control module 120 to keep the power control module 130 in the closed-circuit state, so that the battery 140 keeps supplying power to the main control module 110 and the battery management circuit 100 remains in a state of operating properly.

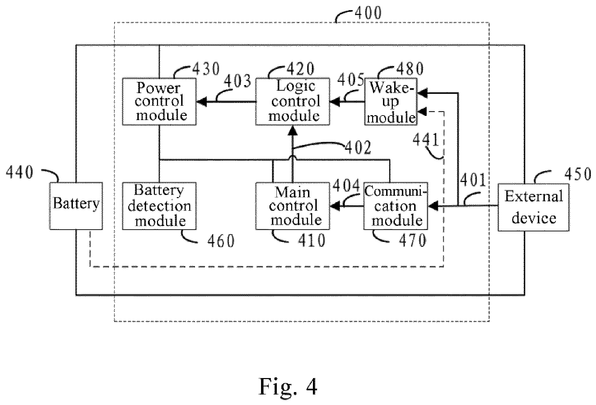

Fig. 4 is a battery management circuit 400 according to another embodiment of the present disclosure. As shown in Fig. 4, the battery management circuit 400 is configured to manage the battery 440 that provides energy to the external device 450. Similar to the embodiment as described in Fig. 1, the battery management circuit 400 comprises a main control module 410, a logic control module 420, a power control module 430, and a wake-up module 480. The wake-up module 480 can receive an operating signal 401 sent by the external device 450 and output a logic-enable signal 405 to the logic control module 420, and can also receive a triggering signal 441 sent by the battery 440 due to the triggering of the battery energy status indicator switch, as indicated by the dashed line with an arrowhead in Fig. 4, and output a logic-enable signal 405 to the logic control module 420. In addition, to monitor status-related parameters of the battery 440, the battery management circuit 400 further comprises a battery monitoring module 460. Similar to the main control module 410, the battery monitoring module 460 is also connected to the battery 440 by the power control module 430 to receive power supply from the battery 440. The battery monitoring module 460 may be implemented through a current sensor, voltage sensor, temperature sensor, battery capacity detecting circuit, a residual power detecting circuit, a displaying circuit, etc. The battery monitoring module 460, besides monitoring an individual voltage, including ripple voltage, ripple current, individual internal resistance, and terminal temperature, also collects monitoring data including group terminal voltage and current, all of which are transmitted to the main control module 410, wherein, in one aspect, a user can find out the status of the battery 440 in real time, and in another aspect, the main control module 410 can further perform arithmetic processing on the basis of the monitoring data, and output signals, such as prompts, to the battery monitoring module 460, so that the battery monitoring module 460 can display the operating status of the battery in real time and provide necessary prompts.

To allow communication with the external device 450, the battery management circuit 400 may further comprise a communication module 470. Similar to the main control module 410, the communication module 470 is also connected to the battery 440 by the power control module 430 to receive power supply from the battery 440. The communication module 470 can adopt UART, I2C, SPI, CAN, RS485, or another communication method, and, in this embodiment, taking serial port (UART) communication for example, a UART (Universal Asynchronous Receiver/Transmitter) is used for the data transmission of operating signals and control signals between the communication module 470 and the external device 450. In one aspect, the main control module 410 transmits, through the communication module 470, a control signal for controlling or regulating the operation of the external device 450 to the external device 450; and in another aspect, the external device 450 sends an operating signal 401 to the main control module 410 through the communication module 470. The main control module 410 receives, from the communication module 470, the operating signal 404 sent by the external device 450.

As mentioned earlier, when the external device 450 is in a normal operating state, the power control module 430 remains in the closed-circuit state, and thus the power control module 430 turns on the power supply from the battery 440 to the main control module 410, the battery monitoring module 460, and the communication module 470, so that the main control module 410, the battery monitoring module 460, and the communication module 470 remain in a normal operating state.

When the external device 450 has been turned off for a period of time or has failed, the power control module 430 switches to the off state, so that the power control module 430 accordingly turns off the power supply from the battery 440 to the main control module 410, the battery monitoring module 460, and the communication module 470, causing the main control module 410, the battery monitoring module 460, and the communication module 470 to enter the off state. As a result, the main control module 410, the battery monitoring module 460, and the communication module 470 no longer consume the power of the battery 440, which further reduces the consumption of battery power by the battery management circuit 400 in the off state.

On the basis of the battery management circuits of some embodiments described above, the battery management circuit 400 of this embodiment, similar to the above-described embodiment, comprises the main control module 410, the logic control module 420, the power control module 430, the battery monitoring module 460, the communication module 470, and the wake-up module 480, and the battery management circuit 400 may be understood to further comprise other functional modules, and other functional modules may also be connected to the battery 440 by the power control module 430 to receive power supply from the battery 440. When the power control module 430 is in the off state, the battery management circuit 400 will also be turned off and no longer consume the power of the battery 440.

A battery management circuit of the present disclosure. In one aspect, in comparison with the low-power mode adopted in the prior art, is more effective in reducing the consumption of battery energy by the battery management circuit when the external device is stopped, thereby substantially extending the power supply duration of the battery or battery pack, and improving the user experience. In another aspect, the logic control module in the battery management circuit of the present disclosure ensures that relevant modules, especially the main control module, enter the off state, which avoids the problem in the prior art of the battery management circuit failing to be completely turned off because an attenuated output signal generated by a reset of a main control chip during the turn-off period is mistakenly connected to the battery management circuit.

In addition, since the battery management circuit 400 of the present disclosure uses a logic control module and a power control module to control the power supply of the battery 440 to the battery management circuit 400, even when the battery management circuit 400 is installed in a power supply system, the power control module will not be in the closed-circuit state as long as the logic control module receives no logic-enable signal, and thus the various devices in the battery management circuit will still remain uncharged. Therefore, with a battery management circuit according to the present disclosure, a circuit board may be installed and tested safely and conveniently, without the need to specifically add a jumper design for the battery management circuit in the prior art for the safety of installation and testing, which avoids the problem of installation failure caused during the process of product manufacture and the problem of failure caused during the process of product packaging using technologies such as ultrasound and high frequency.

A battery management circuit according to the present disclosure may be integrated with a battery to form a battery assembly, wherein the battery management circuit can manage the operation of the battery. The battery assembly may be installed in a power tool to form a power tool system with the power tool, wherein the battery in the battery assembly can supply power to the power tool, and the battery management circuit in the battery assembly can, according to the operating status of the power tool, manage operations of the battery, including controlling the operations of charging and discharging the battery, and switching the battery management circuit to the off state or wake it up from the off state according to the operating status of the power tool in the above-described manner.

Overall, various embodiments of the present disclosure may be implemented with hardware or specific circuits, software, logic, or a combination thereof. Some aspects may be implemented with hardware, while some others may be implemented with firmware or software that is executable by a controller, a microprocessor, or another computing device. Although various aspects of the present disclosure are shown and described as block diagrams, flowcharts, or other graphical representations, it is comprehensible that the block diagrams, devices, systems, techniques, or methods described herein may be implemented in a non-restrictive manner with hardware, software, firmware, specific circuits or logic, general hardware or controllers, or other computing devices or a combination thereof.

Furthermore, although operations are described in a specific sequence, this should not be understood as requiring the described operations to be executed in the sequence shown or in succession, or requiring all the indicated operations to be executed to achieve a desired result. In some cases, multitasking or parallel processing may be advantageous. Similarly, although the details of several specific implementations are included in the above discussion, these should not be construed as any limitations on the scope of the present disclosure, but rather the description of features is only for specific embodiments. Some features described in some separate embodiments may also be executed in combination in a single embodiment. Conversely, the various features described in a single embodiment may also be implemented separately in a plurality of embodiments or in any suitable sub-combination.

While the present disclosure has been described in terms of specific structural features and/or methods and actions, it may be understood that the present disclosure, defined by the attached claims, is not necessarily limited to the specific features or actions described above. Instead, the specific features and actions described above are disclosed only as exemplary forms of implementing the claims.

## Claims

1. Battery management circuit (100; 400) for managing a battery (140; 440) that provides energy to an external device (150; 450), **characterised in that** the battery management circuit (100; 400) comprises: a main control module (110; 410), a logic control module (120; 420), and a power control module (130; 430), wherein
the logic control module (120; 420) is configured to output a power control signal (103; 403) in response to receiving a logic-enable signal (102; 402), and to skip outputting a power control signal (103; 403) in response to not receiving the logic-enable signal (102; 402);
the power control module (130; 430) is configured to turn on the power supply from the battery (140; 440) to the main control module (110; 410) in response to receiving the power control signal (103; 403) from the logic control module (120; 420), and to turn off the power supply from the battery (140; 440) to the main control module (110; 410) in response to not receiving the power control signal (103; 403) from the logic control module (120; 420); and
the main control module (110; 410) is configured to send the logic-enable signal (102; 402) to the logic control module (120; 420) while power is supplied to the main control module (110; 410) from the battery (140; 440), and to skip sending the logic-enable signal (102; 402) to the logic control module (120; 420) in a first predetermined state.

2. Battery management circuit (100; 400) according to Claim 1, **characterised in that** the battery management circuit (100; 400) further comprises a wake-up module (160; 480), the wake-up module (160; 480) being configured to send the logic-enable signal (104; 405) to the logic control module (120; 420) in response to receiving a wake-up signal (101; 401).

3. Battery management circuit (100; 400) according to Claim 1 or 2, **characterised in that** the logic-enable signal (102; 402; 104; 405) is a level not lower than a first threshold.

4. Battery management circuit (100; 400) according to Claim 3, **characterised in that** the first predetermined state is that:
the battery (140; 440) supplies no power to the main control module (110; 410); or
the main control module (110; 410) receives no operating signal (101; 401; 404) from the external device (150; 450) within a predetermined time period.

5. Battery management circuit (100; 400) according to Claim 2, **characterised in that** the wake-up signal (101; 141; 401; 441) is a triggering signal (141; 441) generated by the battery (140; 440) in response to a user's triggering action or an operating signal (101; 401) of the external device.

6. Battery management circuit (100; 400) according to Claim 5, **characterised in that** the triggering action is a user action triggering an energy status indicator switch of the battery (140; 440).

7. Battery management circuit (100; 400) according to Claim 4 or 5, **characterised in that** an operating signal (101; 401) of the external device (150; 450) is:
a triggering signal (101; 401) generated by the external device (150; 450) in response to a user's triggering action; or
a voltage signal or current signal related to the operating state of the external device (150; 450).

8. Battery management circuit (100; 400) according to Claim 5 or 6, **characterised in that** the wake-up module (160; 480) comprises an isolation unit (161), the isolation unit (161) being configured to generate an induction signal (105) in response to the wake-up signal (101; 141; 401; 441), wherein the induction signal (105) is electrically isolated from the operating signal (101; 401) of the external device (150; 450).

9. Battery management circuit (100; 400) according to Claim 8, **characterised in that** the wake-up module (160; 480) further comprises a voltage-doubling unit (162), the voltage-doubling unit (162) being configured to perform voltage amplification of the induction signal (105) to generate the logic-enable signal (104; 405).

10. Battery management circuit (100; 400) according to Claim 8, **characterised in that** the isolation unit (161) is composed of a resistor-capacitor unit, an optocoupler, or a transformer.

11. Battery management circuit (100; 400) according to Claim 1, **characterised in that** the battery management circuit (100; 400) further comprises:
a battery monitoring module (460) configured to monitor and/or display status parameters of the battery (140; 440); and
a communication module (470) configured to communicate with the external device (150; 450);
the power control module (130; 430) is further configured to turn on the power supply from the battery (140; 440) to the battery monitoring module (460) and the communication module (470) in response to receiving the power control signal (103; 403) from the logic control module (120; 420), and to turn off the power supply from the battery (140; 440) to the battery monitoring module (460) and the communication module (470) in response to not receiving the power control signal (103; 403) from the logic control module (120; 420).

12. Battery management circuit (100; 400) according to Claim 1, **characterised in that** the power control module (130; 430) is connected in parallel to a power output circuit from the battery (140; 440) to the external device (150; 450).

13. Battery management circuit (100; 400) according to Claim 3, **characterised in that** a level of the first threshold is between 3 volts and 3.3 volts.

14. Battery assembly, **characterised in that** it comprises a battery and a battery management circuit according to any one of Claims 1-13.

15. Power tool system comprising a power tool and a battery assembly according to Claim 14, wherein the battery assembly is configured to supply power to the power tool (150; 450).
